(19) Europäisches Patentamt
European Patent Office
Office européen des brevets

(11) Veröffentlichungsnummer: **0 243 319**
**A2**

(12) **EUROPÄISCHE PATENTANMELDUNG**

(21) Anmeldenummer: **87810249.0**

(22) Anmeldetag: **21.04.87**

(51) Int. Cl.⁴: **C 08 K 5/34**
C 08 L 23/02

(30) Priorität: **25.04.86 CH 1690/86**

(43) Veröffentlichungstag der Anmeldung:
**28.10.87 Patentblatt 87/44**

(84) Benannte Vertragsstaaten:
**AT BE CH DE ES FR GB IT LI NL SE**

(71) Anmelder: **CIBA-GEIGY AG**
**Klybeckstrasse 141**
**CH-4002 Basel (CH)**

(72) Erfinder: **Gugumus, François, Dr.**
**Burgfeldermattweg 17**
**CH-4123 Allschwil (CH)**

**Rody, Jean, Dr.**
**Rütiring 82**
**CH-4125 Riehen (CH)**

(54) **Gegen Lichteinwirkung stabilisierte Thermoplasten.**

(57) Di-(2,2,6,6-tetramethyl-4-piperidinyl)-succinat und -glutarat sind sehr wirkungsvolles Lichtschutzmittel für Thermoplasten, insbesondere für Polyolefine.

EP 0 243 319 A2

**Beschreibung**

Gegen Lichteinwirkung stabilisierte Thermoplasten

Die Erfindung betrifft gegen Lichteinwirkung stabilisierte Thermoplasten, insbesondere Polyolefine. Die Stabilisierung erfolgt hierbei durch Zusatz des Bernsteinsäureesters oder Glutarsäureesters des 2,2,6,6-Tetramethylpiperidinol-4.

Es ist bekannt, dass die meisten Thermoplasten durch Lichteinwirkung geschädigt werden, wobei vor allem der kurzwellige Anteil (UV) des Lichtes massgeblich ist. Besonders stark ist die Lichtschädigung bei Polyolefinen, insbesondere bei Polypropylen. Solche Polymere müssen für Aussenanwendungen gegen Lichteinwirkung stabilisiert werden. Hierfür gibt es heute eine Reihre von wirkungsvollen handelsüblichen Lichtschutzmitteln, wie z.B. Hydroxybenztriazole, Hydroxybenzophenone, Nickelverbindungen, Oxalanilide oder Arylbenzoate. Die wirkungsvollsten Lichtschutzmittel, die heute bekannt sind, sind jedoch die sterisch gehinderten Amine, unter denen die 2,2,6,6-Tetramethylpiperidinderivate die bekanntesten sind. Ein Beispiel hierfür ist das Di-(2,2,6,6-tetramethyl-4-piperidinyl)-sebacat, das unter dem Namen Tinuvin® 770 im Handel ist.

Es wurde nun gefunden, dass sich der Bernsteinsäureester und der Glutarsäureester des 2,2,6,6-Tetramethylpiperidinol-4 besonders gut als Lichtschutzmittel für Thermoplasten eignen. In einzelnen Substraten sind diese Verbindungen wirksamer als vergleichbare bekannte Lichtschutzmittel, beispielsweise als der entsprechende Sebacinsäureester. Diese Verbindungen haben die Formel

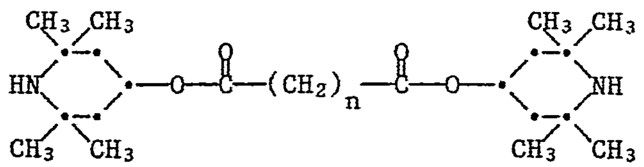

worin in 2 oder 3 ist.

Gegenstand der Erfindung sind daher gegen Lichteinwirkugn stabilisierte thermoplastische Polymere, die als Lichtschutzmittel Di-(2,2,6,6-tetramethyl-4-piperidinyl)-succinat oder Di-(2,2,6,6-tetramethyl-4-piperidinyl)-glutarat enthalten. Bevorzugt enthalten die Polymeren das Succinat (n=2).

In der JP-A-84/53545 wird die Verwendung von Di-(2,2,6,6-tetramethyl-4-piperidinyl)-succinat als Lichtschutzmittel für Latices synthetischer Kautschuke, welche $TiO_2$ enthalten, vorgeschlagen. Die Verbindung ist dort genannt, aber nicht näher beschrieben. Beide Verbindungen können nach dem Verfahren der US-A-3,840,494 durch Umesterung von 4-Hydroxy-2,2,6,6-tetramethylpiperidin mit einem Dialkyl-succinat bzw. -glutarat hergestellt werden. In der US-A-3,840,494 ist auch das homologe Di-(1,2,2,6,6-pentamethyl-4-piperidinyl)-succinat genannt. Diese Verbindung ist jedoch wegen ihres niedrigen Schmelzpunktes als Stabilisator für thermoplastische Polymere wenig geeignet. Demhingegen schmilzt das Di-(2,2,6,6-tetramethyl-4-piperidinyl)-succinat bei 118°C, das Di-(2,2,6,6-tetramethyl-4-piperidinyl)-glutarat bei 83-84°C, wodurch das trockene Mischen mit dem gepulverten oder granulierten thermoplastischen Polymer möglich ist.

Beispiele für thermoplastische Polymere, die mit diesen Verbindungen stabilisiert werden können, sind

1. Polymere von Monoolefinen, beispielsweise Polyethylen, Polypropylen, Polyisobutylen, Polybuten-1, Polymethylpenten-1, sowie Polymerisate von Cycloolefinen wie z.B. von Cyclopenten oder Norbornen.

2. Mischungen der unter 1) genannten Polymeren, z.B. Mischungen von Polypropylen mit Polyisobutylen mit Polyethylen oder mit EPDM.

3. Copolymere von Monoolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere).

4. Polystyrol, Poly-(p-methylstyrol), und Styrol-Copolymere mit anderen Vinylmonomeren, wie z.B. Styrol-Acrylnitril, Styrol-Alkylmethacrylat, Styrol-Maleinanhydrid, Styrol-Acrylnitril-Methylacrylat;

5. Halogenhaltige Polyere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

6. Polymere, die sich von α,β-ungesättigten Säuren und deren Derivaten ableiten, wie Polyacrylate und Polymethacrylate, Polyacrylamide und Polyacrylnitrile.

7. Copolymere der unter 6) genannten Monomeren untereinander oder mit anderen ungesättigten Monomeren, wie z.B. Acrylnitril-Alkylacrylat-Copolymere, Acrylnitril-Alkoxyalkylacrylat-Copolymere oder Acrylnitril-Vinylhalogenid-Copolymere.

8. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

9. Homo- und Copolymere von cyclischen Ethern, wie Polyalkylenglykole, Polyethylenoxyd, Polypropylenoxyd oder deren Copolymere mit Bisglycidylethern.

10. Polyacetale, wie Polyoxymethylen, sowie solche Polyoxymethylene, die Comonomere, wie z.B. Ethylenoxid, enthalten.

11. Polyphenyloxide und -sulfide und deren Mischungen mit Styrolpolymeren.

12. Polyurethane, die sich von Polyethern oder Polyestern mit endständigen Hydroxylgruppen einerseits und aliphatischen oder aromatischen Polyisocyanaten andererseits ableiten, sowie deren Vorprodukte.

13. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylen-isophthalamid, sowie deren Block-Copolymere mit Polyethern, wie z.B. mit Polyethylenglykol, Polypropylenglykol oder Polytetramethylenglykol.

14. Polyharnstoffe, Polyimide, Polyamid-imide und Polybenzimidazole.

15. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-di methylolcyclohexanterephthalat, Polyhydroxybenzoate, sowie Block-Polyether-ester, die sich von Polyethern mit Hydroxylendgruppen ableiten.

16. Polycarbonate und Polyestercarbonate.

17. Polysulfone, Polyethersulfone und Polyetherketone.

Von besonderer Bedeutung ist die Stabilisierung von Polyolefinen und Olefincopolymeren, wie sie oben unter 1-3 aufgezählt sind, insbesondere aber die Stabilisierung von Polypropylen und Propylencopolymeren. Die Zusatzmenge an Lichtschutzmittel beträgt zweckmässig 0,01 bis 5 Gew.-%, bevorzugt 0,025 bis 2 Gew.-%, bezogen auf das zu stabilisierende Polymer.

Der Zusatz kann vor, während oder nach der Polymerisation erfolgen, jedoch vor oder während der Formgebung. Der Stabilisator kann z.B. mit den pulverförmigen Polymeren vermischt werden oder zur Schmelze des Polymeren zugesetzt werden nach den hierfür üblichen Methoden. Der Stabilisator kann auch in Form eines Masterbatch, der z.B. 5-25 % des Stabilisators enthält, zugemischt werden.

Ausser dem erfindungsgemässen Stabilisator können dem Polymeren auch noch andere, bekannte Stabilisatoren zugesetzt werden. Beispiele hierfür sind die folgenden Klassen von Stabilisatoren:

1. <u>Antioxidantien</u>

<u>1.1. Alkylierte Monophenole</u>, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert.butyl-4-methoxymethylphenol.

<u>1.2. Alkylierte Hydrochinone</u>, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

<u>1.3. Hydroxylierte Thiodiphenylether</u>, z.B. 2,2′-Thio-bis-(6-tert.-butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

<u>1.4. Alkyliden-Bisphenole</u>, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Ethyliden-bis-(4,6-di-tert.butylphenol), 2,2′-Ethyliden-bis-(4,6- di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.-butylphenol), 4,4′-Methylen-bis-(6-tert.butyl-2-methylphenol), 1,1-Bis-(5-tert.butyl-4-hydroxy-2-methylphenyl)-butan, 2,6-Di-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Di-(3-tert.butyl-4-hydroxy-5-methylphenyl)-dicyclopentadien, Di-[2-(3′-tert.butyl-2′-hydroxy-5′-methyl-benzyl)-6-tert.butyl-4-methyl-phenyl]-terephthalat.

<u>1.5 Benzylverbindungen</u>, z.B. 1,3,5-Tri-(3,5-di-tert.butyl-4-hydroxybenzyl)-2,4,6-trimethylbenzol, Di-(3,5-di-tert.butyl-4-hydroxybenzyl)-sulfid, 3,5-Di-tret.butyl-4-hydroxybenzyl-mercaptoessigsäure-isoocytylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)- isocyanurat, 3,5-Di-tert.butyl-4-hydroxybenzyl-phosphonsäure-dioctadecylester, 3,5-Di-tert.butyl-4-hydroxybenzyl-phosphonsäure-monoethylester, Calcium-salz.

<u>1.6. Acylaminophenole</u>, z.B. 4-Hydroxy-laurinsäureanilid, 4-Hydroxystearinsäureanilid, 2,4-Bis-octylmercapto-6-(3,5-di-tert.butyl-4-hydroxyanilino)-s-triazin, N-(3,5-di-tert.butyl-4-hydroxyphenyl)-carbaminsäureoctylester.

<u>1.7. Ester der β-(3,5-Di-tert.butyl-4-hydroxyphenyl)-propionsäure</u> mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat, Di-hydroxyethyl-oxalsäurediamid.

<u>1.8. Ester der β-(5-tert.Butyl-4-hydroxy-3-methylphenyl)-propionsäure</u> mit ein- oder mehrwertigen Alkoholen, wie z.B. mit Methanol, Octadecanol, 1,6-Hexandiol, Neopentylglycol, Thiodiethylenglycol, Diethylenglycol, Trithylenglycol, Pentaerythrit, Tris-hydroxyethylisocyanurat, Di-hydroxyethyl-oxyalsäurediamid.

1.9. Amide der β-(3,5-Di-tert.butyl-4-hydroxyphenyl)-propionsäure, wie z.B. N,N'-Di-(3,5-di-tert.butyl-4-hydroxyphenylpropionyl)-hexamethylendiamin, N,N'-Di-(3,5-di-tert.butyl-4-hydroxyphenylpropionyl)-trimethylendiamin, N,N'-Di-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethyl-butyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.-amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzyl-phosphonsäure-monoalkylester, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Tris-(2,2,6,6-ttramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Didodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyl-oxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphorphit, Tetrakis-(2,4-di-tert.butylphenyl)-4,4'-biphenylen-diphosphonit, 3,9-Bis-(2,4-di-tert.butylphenoxy-2,4,8,10-tetraoxa-3,9-diphosphaspiro[5.5]undecan.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Hanstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

Die Mitverwendung bekannter Stabilisatoren kann zu besonders günstigen Stabilisierungseffekten führen, was besonders bei der Mitverwendung von UV-Absorbern und/oder phenolischen Antioxidantien der Fall ist. Von besonderer Bedeutung ist die Mitverwendung von phenolischen Antioxidantien, von Phosphiten oder Phosphoniten und von Erdalkalisalzen höherer Fettsäuren bei der Stabilisierung von Polyolefinen. Die Zusatzmenge der einzelnen Costabilisatoren beträgt ebenfalls zweckmässig 0,01 bis 5 Gew.-%, vorzugsweise 0,025 bis 2 Gew.-%, bezogen auf das Polymer.

Weiterhin können sonstige in der Kunststoff-Technologie übliche Zusätze, wie z.B. Pigmente, Füllstoffe, Verstärkungsmittel, Gleitmittel, Flammschutzmittel, Antistatika, Treibmittel oder Weichmacher zugesetzt werden.

Die so stabilisierten Kunststoffe können in verschiedenster Form angewendet werden, z.B. als Folien, Fasern, Bändchen, Platten, Gefässe, Rohre oder sonstige Profile.

Die folgenden Beispiele beschreiben die Herstellung der genannten Verbindungen und ihre Verwendung in Thermoplasten. Teile bedeuten darin Gewichtsteile und % Gewichts-%, soweit nicht anders vermerkt.

Beispiel 1: Herstellung von Di-(2,2,6,6-tetramethyl-4-piperidinyl)-succinat.

322,3 g (2,05 Mol) 4-Hydroxy-2,2,6,6-tetramethylpiperidin und 146,1 g (1 Mol) Bernsteinsäuredimethylester werden in 300 ml Xylol auf 80°C erhitzt. Bei dieser Temperatur gibt man 1,2 g Lithiumamid zum

Reaktionsgemisch und steigert die Temperatur bis auf 120-125° C. Unter schwachem Stickstoffstrom wird nun langsam ein Gemisch aus Methanol and Xylol abdestilliert. Nach ca. 10 Stuenden destilliert praktisch kein Methanol mehr ab, was das Ende der Umesterung anzeigt. Der Kolbeninhalt wird mit 500 ml Benzin (Siedegrenze 110-140° C) verdünnt und noch warm (60-70° C) im Scheidetrichter dreimal mit je 100 ml Wasser gewaschen. Aus der organischen Phase kristallisiert das Reaktionsprodukt beim Abkühlen als farblose Kristalle. Das erhaltene Di-(2,2,6,6-tetramethyl-4-piperidinyl)-succinat schmilzt bei 118° C.

Beispiel 2: Herstellung von Di-(2,2,6,6-tetramethyl-4-piperidinyl)-glutarat

Es wird wie in Beispiel 1 verfahren unter Verwendung von 160,2 g (1 Mol) Glutarsäuredimethylester anstelle des Bernsteinsäureesters. Das Rohprodukt (Eindampfrest der organischen Phase) wird aus 1200 ml Benzin des Siedebereiches 110-140° C kristallisiert. Die Kristalle schmelzen bei 83-84° C.

Beispiel 3: Lichtschutzwirkung in Polypropylen-Bändchen

100 Teile Polypropylenpulver [Schmelzindex 2,4 g/10 min. (230° C, 2160 g)] werden in einem Trommelmischer mit 0,05 Teilen Pentaerythrityl-tetrakis-[β-(3,5-di-tert.butyl-4-hydroxiphenyl)-propionat], 0,05 Teilen Tris-(2,4-di-tert.butylphenyl)-phosphit, 0,1 Teilen Ca-Stearat und 0,05 Teilen des Lichtschutzmittels gemischt und anschliessend in einem Extruder bei einer Temperatur von 180 bis 220° C granuliert.

Das erhaltene Granulat wird in einem zweiten Extruder mit Breitschlitzdüse (Temperatur 220 bis 260° C) zu einer Folie verarbeitet, die in Bändchen geschnitten wird, welche anschliessend bei erhöhter Temperatur im Verhältnis 1:6 verstreckt und aufgewickelt werden (Titer der Bändchen: 700 bis 900 den; Reissfestigkeit: 5,5 bis 6,5 g/den.

Die so hergestellten Polypropylenbändchen werden spannungslos auf Probenträger aufgebracht und im Weather-O-Meter WRC 600 belichtet. Nach verschiedenen Zeiten werden je 5 Prüflinge entnommen und ihre Reissfestigkeit bestimmt. Als Mass für die Schutzwirkung der einzelnen Lichtschutzmittel gilt die Belichtungszeit, nach der die Reissfestigkeit der Bändchen auf 50 % des Ausgangswertes zurückgegangen ist. Die erhaltenen Werte sind in Tabelle 1 aufgeführt.

Tabelle 1

| Lichtschutzmittel | Belichtungszeit bis 50 % Reissfestigkeit |
|---|---|
| keines | 560 h |
| 0,05 % Di-(2,2,6,6-tetramethyl-4-piperidinyl)-succinat | 2820 h |

Beispiel 4: Lichtschutz von Polypropylen-Bändchen

Es wird wie in Beispiel 3 verfahren, jedoch werden die Polypropylen-Bändchen in einem Weather-O-Meter Ci 65 belichtet bei einer Schwarztafel-Temperatur von 63 ± 3° C.

Tabelle 2

| Lichtschutzmittel | Belichtungszeit bis 50 % Reissfestigkeit |
|---|---|
| keines | 560 h |
| 0,05 % Di-(2,2,6,6-tetramethyl-4-piperidinyl)-glutarat | > 1400 h |

Beispiel 5: Lichtschutzwirkung in 2 mm dicken Polypropylen-Spritzgussplättchen

100 Teile Polypropylenpulver [Schmelzindex 2,4 g/10 min 230° C/2160 g)] werden in einem Trommelmischer mit 0,05 Teilen Pentaerythrityl-tetrakis-[β-(3,5-di-tert.butyl-4-hydroxiphenyl)-propionat], 0,05 Teilen Tris-(2,4-di-tert.butylphenyl)-phosphit, 0,1 Teilen Ca-Stearat, 0,1 Teilen Phthalocyaninblau und 0,2 Teilen Lichtschutzmittel gemischt und anschliessend in einem Extruder bei einer Temperatur von 200 bis 220° C granuliert.

Das erhaltene Granulat wird in einem Spritzgussautomaten, bei einer Temperatur von 190 bis 220°C, zu 2 mm dicken Plättchen gespritzt.

Die so hergestellten Polypropylenplättchen werden im Weather-O-Meter 65 WR bei einer Schwarztafeltemperatur von 63 ± 3°C (ASTM G 26-77) belichtet. In regelmässigen Zeitabständen werden die Proben visuell auf Kreidung untersucht. Als Mass für die Schutzwirkung der einzelnen Lichtschutzmittel gilt die Belichtungszeit bis zur beginnenden Verkreidung. Die Ergebnisse sind in Tabelle 3 aufgeführt.

Tabelle 3

| Lichtschutzmittel (0,2 %) | Belichtungszeit bis zu beginnender Verkreidung |
|---|---|
| Di-(2,2,6,6-tetramethyl-piperidin-4-yl)-succinat | 6100 h |
| keines | 510 h |

Beispiel 6: Lichtschutz von Polypropylen-Spritzgussplättchen

Es wird wie in Beispiel 5 verfahren, jedoch werden auf 100 Teile Polypropylen nur 0,05 Teile Phthalocyaninblau und nur 0,05 Teile Lichtschutzmittel verwendet. Die Vrarbeitung zu Plättchen erfolgt im Spritzgussautomaten bei 250-260°C. Die Plättchen werden in einem Weather-O-Meter Ci 65 belichtet. Die Beurteilung erfolgt wie im Beispiel 5.

Tabelle 4

| Lichtschutzmittel | Belichtungszeit bis zu beginnender Verkreidung |
|---|---|
| 0,05 % Di-(2,2,6,6-tetramethyl-4-piperidinyl)-glutarat | > 1400 h |
| keines | 475 h |

**Patentansprüche**

1. Gegen Lichteinwirkung stabilisiertes thermoplastisches Polymer, enthaltend als Lichtschutzmittel Di-(2,2,6,6-tetramethyl-4-piperidinyl)-succinat oder Di-(2,2,6,6-tetramethyl-4-piperidinyl)-glutarat.
2. Stabilisiertes thermoplastisches Polymer, enthaltend als Lichtschutzmittel Di-(2,2,6,6-tetramethyl-4-piperidinyl)-succinat.
3. Stabilisiertes Polyolefin oder Olefincopolymer gemäss Anspruch 1.
4. Stabilisiertes Polypropylen oder Propylencopolymer gemäss Anspruch 3.
5. Stabilisiertes Polymer gemäss Anspruch 1, enthaltend 0,01 bis 5 Gew.-% Lichtschutzmittel, bezogen auf das Polymere.
6. Stabilisiertes Polymer gemäss Anspruch 1, enthaltend 0,025 bis 2 Gew.-% Lichtschutzmittel, bezogen auf das Polymer.
7. Stabilisiertes Polymer gemäss Anspruch 1, enthaltend ausser dem Lichtschutzmittel einen UV-Absorber.
8. Stabilisiertes Polymer gemäss Anspruch 6, enthaltend ausser dem Lichtschutzmittel einen UV-Absorber und ein Antioxidans.
9. Stabilisiertes Polyolefin gemäss Anspruch 3 enthaltend ausser dem Lichtschutzmittel ein phenolisches Antioxidans, ein Phosphit oder Phosphonit und ein Erdalkalisalz einer höheren Fettsäure.